Europäisches Patentamt

European Patent Office

Office européen des brevets

(11) Veröffentlichungsnummer: **0 424 360 A2**

## (12) EUROPÄISCHE PATENTANMELDUNG

(21) Anmeldenummer: **91100138.6**

(22) Anmeldetag: **25.11.86**

(51) Int. Cl.⁵: **F16K 3/24**, F16K 5/04,
F16J 15/20

This application was filed on 04.01.1991 as a divisional application to the application mentioned under INID code 60.

(30) Priorität: **03.12.85 DE 3542636**
**16.09.86 DE 3631447**
**08.07.86 DE 3622889**

(43) Veröffentlichungstag der Anmeldung:
**24.04.91 Patentblatt 91/17**

(60) Veröffentlichungsnummer der früheren
Anmeldung nach Art. 76 EPÜ: **0 248 944**

(84) Benannte Vertragsstaaten:
**AT DE ES FR GB IT SE**

(71) Anmelder: **Klinger AG**
**Baarerstrasse 10**
**CH-6301 Zug(CH)**

(72) Erfinder: **Huber, Richard**
**Fürstenstrasse 17b**
**A-2340 Mödling(AT)**
Erfinder: **Wirz, Peter**
**Im Juch 733**
**CH-5726 Unterkulm (AG)(CH)**

(74) Vertreter: **Sparing Röhl Henseler**
**Patentanwälte European Patent Attorneys**
**Rethelstrasse 123**
**W-4000 Düsseldorf 1(DE)**

(54) **Absperrorgan.**

(57) Die Erfindung betrifft ein Absperrorgan , insbesondere für fluidführende Leitungen für größere Temperaturbereiche, etwa in Form eines Kolbenschiebers oder eines Kükenhahns mit mindestens einer Dichtung (2), die Blähgraphit enthält und die zur Erhöhung bzw. Verbesserung der Lebensdauer und Dauerdichtheit aus einem Preßkörper mit einer Dichte von 1,5 bis 2,2 g/cm³, entweder aus Pulver gepreßt oder aus Lamellen geschichtet, deren Schnittkanten am Sperrglied (3) anliegen, besteht.

Fig. 1

## ABSPERRORGAN

Die Erfindung betrifft ein Absperrorgan mit den im Oberbegriff des Patentanspruchs 1 genannten Merkmalen sowie Dichtungen für solche Ventile.

Absperrorgane der hier in Rede stehenden Art sind beispielsweise Kolbenschieber, bei denen das Sperrglied ein axial verlagerbarer Kolben ist, oder Kükenhähne, bei denen das Sperr- oder Ventilglied ein um eine Achse drehbares Küken ist. Im ersteren Falle wird der Kolben gegen das Gehäuse durch mindestens einen Dichtring abgedichtet, im letzteren Fall wird das Küken gegen das Gehäuse durch eine Büchse abgedichtet.

Bei Absperrorganen ist die Verwendung von Dichtungen aus expandiertem Graphit bekannt, die den Nachteil besitzen, daß sie einerseits in vielen Fällen zu hohe Reibwerte und andererseits nicht genügend Erosionsfestigkeit aufweisen, wenn sie dem strömenden Medium ausgesetzt sind. Insbesondere weisen solche bekannten Dichtungen zu niedrige Dichte auf und sind durch Formpressen eines zur Achse koaxialen Wickels einer Graphitfolie mit etwa der Breite der Axialabmessung von Dichtring bzw. Büchse hergestellt. Mit einer solchen Dichtung ausgestattete Ventile haben eine relativ geringe Lebensdauer, auch wenn eine sogenannte Nachdichtung möglich ist, bei welcher also die Dichtung bei Undichtheit axial zusammengepreßt werden kann. Das axiale Zusammenpressen in der Produktion oder beim Nachdichten bewirkt ein unkontrolliertes Ausknicken der einzelnen Lagen des Wickels, so daß Inhomogenitäten entstehen, welche die Lebensdauer negativ beeinflussen. Außerdem erhöht sich bei jedem Nachdichten die Betätigungskraft, weil die innerste Lage des Wickels ebenflächig, insbesondere auch mit unterschiedlicher, örtlich stark überhöhter Pressung an dem Absperrglied anliegt, und bei Anströmung lösen sich leicht Teilchen ab.

Aufgabe der Erfindung ist es, ein Absperrorgan der genannten Art zu schaffen, bei dem die Vorteile von expandiertem Graphit als Dichtwerkstoff, nämlich die weitgehende Unabhängigkeit von der Betriebstemperatur, ausgenützt werden können, ohne dessen Nachteile in Kauf nehmen zu müssen.

Diese Aufgabe wird entsprechend dem kennzeichnenden Teil des Anspruchs 1 gelöst.

Ein derartiges Absperrorgan ist bei geringer Betätigungskraft praktisch nachziehfrei und hat eine befriedigende Lebensdauer, weil die einzelnen verformten Blähgraphitteilchen genügend hohe Dichte aufweisen und nicht mit einer Fläche am Absperrglied anliegen.

Der die Dichtung bildende Preßkörper kann entweder vorgefertigt sein, in welchem Falle er aus Pulver gepreßt wird, oder aus radial bezüglich der Achse verlaufenden Lamellen aufgebaut sein, die bei der Montage einer Druckbelastung in Axialrichtung unterworfen werden.

Dabei ist unter "Pulver" unverarbeitetes Graphitexpandat zu verstehen, auch wenn es bereits einem Verdichtungsvorgang unterworfen war, (jedoch kein gemahlener Abfall) gegebenenfalls mit pulverförmigen oder körnigen Beimengungen, z.B. Füllstoffen.

Die Dichtung kann im Gehäuse oder im Absperrglied angeordnet sein. Dabei kann sie bereits mit der gewünschten Dichte eingebracht und dort im Gehäuse oder Kolben abgedichtet unverschieblich festgehalten sein. Andererseits ist es auch möglich, sie mit einer geringeren Dichte zu fertigen und erst nach dem Einbau im Gehäuse oder Absperrglied zusätzlich auf die gewünschte Dichte zu pressen. Dies ist insbesondere dann von Vorteil wenn gestanzte Lamellen verwendet werden, die nicht vor dem Einbau vorgepreßt werden, weil dann die Anpassung auf die genauen Durchmesserverhältnisse bei der Montage erfolgen kann.

Wenn ein Kolbenschieber ein zusätzliches ringförmiges Dichtelement aufweist, das ebenso wie der Dichtring in die Gehäusebohrung eingelassen ist und zur Abdichtung nach außen mit dem Kolben zusammenwirkt, kann dieses Dichtelement eine geringere Dichte aufweisen, weil damit der Reibungswiderstand zusätzlich vermindert wird.

Um die Erosionsfestigkeit weiter zu verbessern, kann der Dichtring mit einem Schutzring abgedeckt sein, der zum Nennmaß der dynamisch abdichtenden Dichtringfläche oder der Gegenfläche im Durchmesser ein Spiel von maximal 1 mm aufweist. Dadurch ist es im Rahmen der vorgesehenen Grenzen möglich, eine relativ geringe Dichte zu wählen, weil dann die beim Öffnen und Schließen des Ventils gefährdete Dichtringkante durch den Schutzring geschützt ist. Dieser kann entweder im Kolbenschieber durch einen Bestandteil desselben, z.B. ein Distanzstück, gebildet sein; vorteilhaft ist aber ein gesonderter Ring mit der Stirnseite des Dichtringes verbunden.

Weitere vorteilhafte Ausgestaltungen gehen aus der nachfolgenden Beschreibung und den Unteransprüchen hervor.

Die Erfindung wird nachstehend anhand von in den Zeichnungen dargestellten Ausführungsbeispielen näher erläutert.

Fig. 1 stellt im Axialschnitt ein Absperrorgan in Form eines Kolbenschiebers dar.

Fig. 2 zeigt im Axialschnitt ein Absperrorgan in Form eines Kükenhahns.

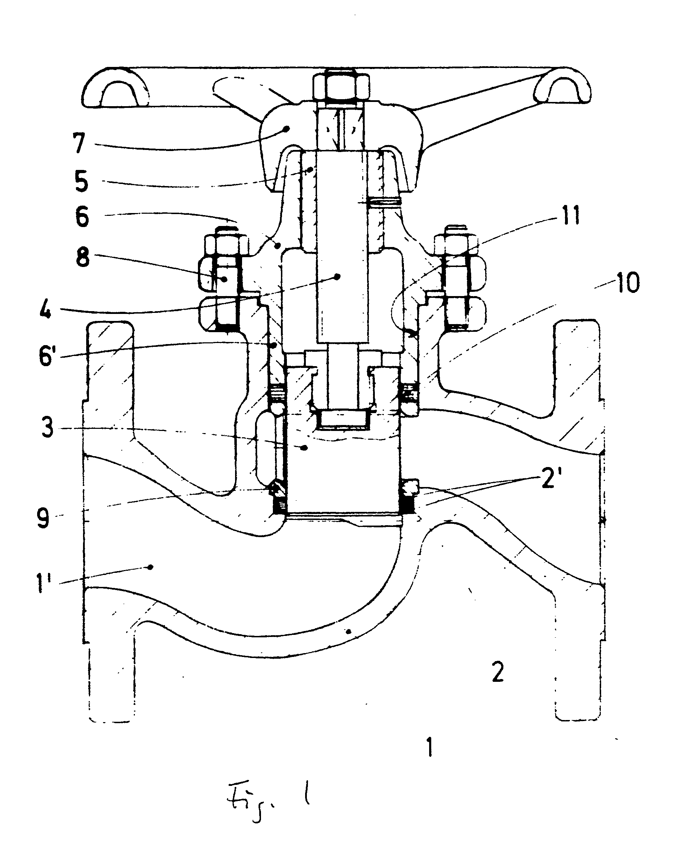

Der in Fig. 1 dargestellte Kolbenschieber ist ein Durchgangsventil mit einem im Gehäuse 1 ausgebildeten Strömungskanal 1', der von einem Dichtring 2 umschlossen ist. Dieser kann in der dargestellten Schließstellung mittels eines eingeschobenen Kolbens 3 abgeschlossen werden, der mittels einer drehbar verbundenen Spindel 4 verschiebbar ist. Die Spindel 4 ist mittels eines Gewindestückes 5 eines Oberteils 6 über ein Betätigungsorgan in Form eines Handrads 7 axial verstellbar. Das Oberteil 6 ist mittels Stiftschrauben 8 am Gehäuse 1 fest verschraubt, wobei ein rohrförmiger Fortsatz 6' des Oberteils 6 in eine Bohrung 11 des Gehäuses 1 reicht, welche auch den Dichtring 2 aufnimmt, sowie ein käfigartiges Distanzstück 9 und ein ringförmiges Dicht element 10 zur Abdichtung nach außen aufweist. Dabei weist die Bohrung 11 im Bereich des Dichtelements 10 und des Distanzstückes 9 einen größeren Durchmesser auf, als im Bereich zur Aufnahme des Dichtringes 2. Die so gebildete Schulter hat eine Höhe, die mindestens der Höhe des Dichtringes 2 im Anlieferzustand entspricht. Das Distanzstück 9 hat einen in diese Bohrung kleineren Durchmesser reichenden Ansatz, so daß bei Anziehen der Stiftschrauben 8 bis zum Anschlag des Oberteiles 6 am Gehäuse 1 das Distanzstück 9 mit dem äußeren Durchmesser an der Bohrungsschulter aufsitzt und den Dichtring 2 in festgelegter Höhe und der entsprechenden Dichte festhält. Da das Dichtungselement 10 eine größere Breite hat, kann es zum Toleranzausgleich zusammengepreßt werden, ohne einerseits infolge der geringeren Dichte einen zu großen Reibungswiderstand am Kolben 3 zu bewirken, aber andererseits den Dichtring 2 mit größerer Flächenpressung sicher festzuhalten. Auf diese Weise kann die Dichte des Dichtringes 2 genau eingehalten werden, wodurch ein geringer Reibungswiderstand bei guter Abdichtung gesichert ist. Der Dichtring 2 weist die vorgesehene höhere Dichte auf, damit er ausreichend gegen Erosion gesichert ist. Der Dichtring 2 besteht beim dargestellten Beispiel aus expandiertem Graphit, der direkt als Pulver (Granulat) mit größerer Höhe gepreßt wurde und beim Verschrauben des Oberteils 6 in seine Anschlagstellung zur erforderlichen Höhe gepreßt wurde. Es ist natürlich auch möglich, den Dichtring 2 direkt in die gewünschte Endhöhe zu pressen, wobei beim Zusammenbau die Rückfederung des Dichtringes 2 zum Teil oder zur Gänze ausgeglichen werden muß. Dies ist auch beim Aufbau des Dichtringes aus gestanzten Ringlamellen möglich. Vorzugsweise wird der Dichtring 2 jedoch höher, d.h. mit geringerer Dichte eingebaut, damit er bei eingeschobenem Kolben 3 durch das Oberteil 6 axial gepreßt wird und hierdurch radial verformt die genauen Kolbenabmessungen annimmt. Vor Einbau des Dichtringes 2 kann vorteilhaft zur Gewährleistung einer guten Abdichtung relativ zum Kolben 3 ein Untermaß von max. 0,2 mm vorgesehen werden. Bei größerem Untermaß und bei der die angestrebten Eigenschaften gewährleistenden Dichte besteht sonst die Gefahr, daß der Dichtring 2 bei der Bewegung des Kolbens 3 beschädigt wird. Der Dichtring 2 weist oben und unten an der Stirnseite einen Schutzring 2' auf, dessen Innendurchmesser nur wenig größer als der des Kolbens 3 ist, damit beim Austreten des Kolbens 3 aus dem Dichtring 2 keine Beschädigungen durch das bei geringer Spaltbreite sehr schnell strömende Medium entstehen können. Dies gilt für den oberen Schutzring 2'. Der untere Schutzring 2 hat die gleichen Dimensionen wie der obere und gewährleistet eine einfache Demontage des unteren Dichtringes 2. Gleichzeitig ist gesichert, daß der Dichtring 2 nicht falsch eingebaut werden kann. Da Verklebungen im Dichtring 2 möglichst vermieden werden sollen, weisen die Schutzringe 2' nagelartige Verbindungselemente auf, die in das Graphitmaterial eingebettet sind. Zur Sicherung gegen Loslösen können die nagelartigen Verbindungselemente auch Widerhaken aufweisen. Statt Schutzringe 2' vorzusehen, ist es natürlich auch möglich, das käfigartige Distanzstück 9 mit solchen Toleranzen auszustatten, daß die Spaltbreite nicht größer als 0,5 mm ist, jedoch wird dies meistens nicht nur fertigungstechnisch, sondern auch funktionell zu Schwierigkeiten führen, weil dann nach längerem Einsatz die Gefahr des Festsitzens des Distanzstückes 9 im Gehäuse 1 bedeutend vergrößert ist.

Der dargestellte Kolbenschieber weist infolge der Ausbildung und gewählten Dichte für die Dichtungen eine gute und auch für lange Betriebsdauer ausreichende Abdichtfähigkeit auf, ohne daß ein Nachpressen der Dichtringe erforderlich wäre, so daß deshalb auch keine Einrichtungen hierfür vorgesehen sind; dabei sind die Betätigungskräfte gering, und die Erosionsgefahr ist weitgehend ausgeschaltet.

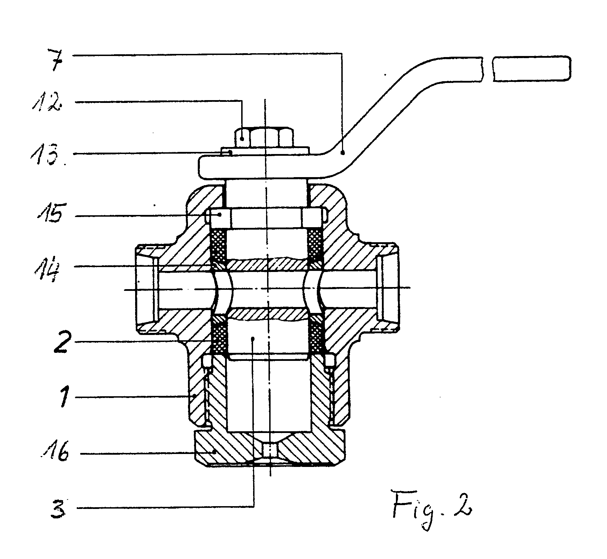

Der in Fig. 2 dargestellte Kükenhahn weist ein Gehäuse 1 auf, in dem eine als Büchse 2 ausgeführte Dichtung aus Blähgraphit abgedichtet und gegen Verdrehung gesichert eingesetzt ist. Sie ist aus expandiertem Graphitpulver, das auch vorgranuliert sein kann, formgepreßt, wobei das spezifische Gewicht etwa 1,6 g/cm$^3$ beträgt. Ein Sperrglied in Form eines zylindrischen Kükens 3 ist durch ein Betätigungsorgan in Form eines aufgesetzten Handgriffs 7 betätigbar, der über eine Schraube 12 mit zwischengeschalteter Sicherungsscheibe 13 mit dem Küken 3 verbunden ist. Die Büchse 2 weist Durchlässe auf, die durch metallische Einsatzringe 14 geschützt sind. Sie bildet auch die Halterung eines zweiteiligen, das Küken 3 axial unverschieblich haltenden Ringes 15 und ist durch eine Verschraubung 16 festgehalten. Ein stärkeres Nachpressen der Büchse 2 aus Wartungsgründen ist beim dargestellten Beispiel nicht möglich, weil die Verschraubung praktisch keinen freien Stellweg zum Gehäuse 1 aufweist. Ein geringer freier Weg ist vorteilhaft, weil beim Festklemmen der Büchse 2 durch die Verschraubung 16 ohne Vorsehen besonders genauer Längentoleranzen für die Büchse 2 kein geeignetes Drehmoment eingestellt werden kann. Es ist dabei dafür zu sorgen, daß die Büchse 2 im Kükenhahn wirklich gekammert ist.

Der dargestellte Kükenhahn ist also praktisch wartungsfrei, wobei die Lebensdauer im Vergleich zu den bekannten Hähnen dieser Art erhöht ist.

## Ansprüche

1. Absperrorgan, insbesondere Ventil, mit einem einen Strömungskanal (1') bildenden Gehäuse (1) und einem relativ zu dem Gehäuse (1) verlagerbaren Sperrglied (3), das unter Zwischenschaltung einer Weichstoff-Dichtung (2) aus einer Blähgraphit enthaltenden Folie eine Gehäusebohrung (11) im Strömungskanal (1') absperrt, dadurch gekennzeichnet, daß die Weichstoff-Dichtung (2) aus Ringlamellen aus Blähgraphit besteht, wobei der Blähgraphit im eingebauten Zustand eine Dichte von 1,5 bis 2,2 g/cm³, vorzugsweise 1,6 bis 1,95 g/cm³ aufweist, die Ringlamellen senkrecht zur Achse des Sperrgliedes (3) verlaufen und die Weichstoff-Dichtung (2) auf mindestens ihrer die Öffnungskante bildenden Stirnseite mit einem Schutzring (2') aus erosionsfestem Material versehen ist.

2. Absperrorgan nach Anspruch 1, dadurch gekennzeichnet, daß die als Dichtring ausgebildete Weichstoff-Dichtung (2) kammernde Teile unverschiebbar befestigt sind und eine zusätzliche Zusammenpressung der Dichtung (2) während des Betriebes nicht möglich ist.

3. Absperrorgan nach Anspruch 1 oder 2 mit einem zusätzlichen ringförmigen Dichtelement (10), das zur Abdichtung nach außen mit einem Kolben als Sperrglied (3) zusammenwirkt, wobei die Dichtung (2) und das Dichtelement (10) in die Gehäusebohrung (11) eingelassen sind, dadurch gekennzeichnet, daß das Dichtelement (10) eine geringere Dichte als die als Dichtung ausgebildete Weichstoff-Dichtung (2), insbesondere zwischen 1,2 und 1,8 g/cm³, aufweist.

4. Absperrorgan nach Anspruch 3, dadurch gekennzeichnet, daß das Dichtelement (10) in Radialrichtung breiter, vorzugsweise etwa doppelt so breit wie der Dichtring (2) ist.

5. Absperrorgan nach Anspruch 4, dadurch gekennzeichnet, daß ein im Durchmesser größerer Abschnitt der Gehäusebohrung (11) für das Dichtelement (10) auch im Bereich eines käfigartigen, den Strömungsdurchlaß bildenden Distanzstückes (9) verläuft, welches, gegebenenfalls unter Verwendung eines Zwischenringes (2'), den Raum für den Dichtring (2) begrenzt.

6. Absperrorgan nach einem der Ansprüche 2 bis 5, dadurch gekennzeichnet, daß der Dichtring (2) in dem als Kolben ausgebildeten Sperrglied (3) angeordnet ist.

7. Absperrorgan nach einem der Ansprüche 3 bis 6, dadurch gekennzeichnet, daß mindestens eine Stirnfläche von den Dichtring (2) und das Dichtelement (10) kammernden Teilen zur Aufnahme von Toleranzen eine Profilierung vorzugsweise mit Zylinder- und/oder Kegelflächen aufweist.

8. Absperrorgan nach einem der Ansprüche 2 bis 7, dadurch gekennzeichnet, daß der Dichtring (2) an seiner die Öffnungskante bildenden Stirnseite durch einen Ring (2') aus erosionsfestem Material abgedeckt ist, der zur dynamisch abdichtenden Gegenfläche an dem als Kolben ausgebildeten Sperrglied (3) im Durchmesser ein Spiel aufweist.

9. Absperrorgan nach Anspruch 1, dadurch gekennzeichnet, daß das Sperrglied (3) ein drehbares Küken ist und zwischen Küken und Gehäuse (1) eine abdichtende Büchse aus Blähgraphit als Weichstoffdichtung (2) angeordnet ist.

10. Dichtungsring zum Einbau in ein Absperrogan nach einem der Ansprüche 2 bis 8, dadurch gekennzeichnet, daß er Blähgraphit mit einer Dichte von 1,3 bis 1,95 g/cm³ vor dem Einbau enthält und bei der Montage auf die Enddichte bringbar ist.

11. Dichtring nach Anspruch 10, dadurch gekennzeichnet, daß er aus mechanisch miteinander verbundenen Lamellen besteht, die vorzugsweise gestanzt sind und senkrecht zur Achse des Dichtringes (2) verlaufen.

12. Dichtring nach einem der Ansprüche 10 oder 11, dadurch gekennzeichnet, daß seine dynamisch abdichtende Zylinderfläche im Durchmesser relativ zum Nennmaß im Sinne eines Paßsitzes ein Übermaß von 0,0 bis 0,25 mm, vorzugsweise 0,05 bis 0,2 mm, aufweist.

13. Dichtring nach Anspruch 12, dadurch gekennzeichnet, daß seine radiale Breite mindestens das 0,03-fache des Ringinnendurchmessers in mm + 2,5 mm beträgt.

14. Dichtring nach Anspruch 11 oder 13, dadurch gekennzeichnet, daß seine axiale Höhe mindestens 3 mm, vorzugsweise aber nicht größer als das 1,4-fache seiner radialen Breite ist.

15. Dichtring nach einem der Ansprüche 10 bis 14, dadurch gekennzeichnet, daß er auf mindestens einer Stirnseite mit einem Metallring (2') versehen ist, der zum Nennmaß der dynamisch abdichtenden Dichtringfläche im Durchmesser Spiel aufweist.

16. Dichtring nach Anspruch 15, gekennzeichnet durch ein Spiel von maximal 1 mm.

17. Dichtring nach Anspruch 15, dadurch gekennzeichnet, daß der Metallring (2') mittels nagel- oder klammerartiger Verbindungselemente mit dem Dichtungsmaterial verbunden ist.

18. Dichtring nach Anspruch 17, dadurch gekennzeichnet, daß die nagelartigen Verbindungselemente Widerhaken aufweisen.

19. Büchse zum Einbau in ein Absperrorgan nach Anspruch 9, dadurch gekennzeichnet, daß sie aus Blähgraphit besteht, ein spezifisches Gewicht von 1,3 bis 1,95 g/cm$^3$ aufweist und aus senkrecht zur Kükendrehachse verlaufenden gestanzten Lamellen ausgebildet ist.

20. Büchse nach Anspruch 19 zum Einbau in ein Ventil in Form eines Kükenhahns mit einem zylindrischen Küken, dadurch gekennzeichnet, daß sie zum Gehäuse (1) mindestens ein Übermaß von 0,01 mm und zu dem zylindrischen Küken (3) mindestens ein Übermaß von 0,01 mm aufweist.

Fig. 1

Fig. 2